# EUROPEAN PATENT SPECIFICATION

(11) **EP 0 603 794 B1**
(45) Date of publication and mention of the grant of the patent: **04.08.1999**
(21) Application number: 93120528.0
(22) Date of filing: 20.12.1993
(51) Int. Cl.: G06F 7/552, G06F 17/16

(54) **Method and circuit for calculating the reciprocal of the amplitude of a vector**
Verfahren und Schaltungsanordnung zur Berechnung des Kehrwerts der Amplitude eines Vektors
Procédé et circuit pour le calcul de la valeur réciproque de l'amplitude d'un vecteur

(30) Priority: 25.12.1992 JP 34573192
(43) Date of publication of application: 29.06.1994
(73) Proprietor: FUJITSU LIMITED, Kawasaki-shi, Kanagawa 211 (JP)
(72) Inventor: Kaku, Takashi, Fujitsu Ltd., 1015 Kami-kodanaka, Kanagawa 211 (JP); Miyazawa, Hideo, Fujitsu Ltd., 1015 Kami-kodanaka, Kanagawa 211 (JP)
(74) Representative: Stebbing, Timothy Charles

(56) References cited:
- IBM JOURNAL OF RESEARCH AND DEVELOPMENT vol. 16, no. 4 , July 1972 , NEW YORK US pages 380 - 388 TIEN CHI CHEN 'Automatic Computation of Exponentials, Logarithms, Ratios and Square Roots'
- IEEE MICRO vol. 9, no. 3 , June 1989 , NEW YORK US pages 26 - 44 XP000036177 S. KAWASAKI ET AL. 'A Floating-Point VLSI Chip for the TRON Architecture'
- ELEKTRONIK vol. 34, no. 22 , October 1985 , MUNCHEN, GERMANY. pages 78 - 82 R. WOLLENBERG ET AL. 'Fractional-Arithmetik'
- IEEE TRANSACTIONS ON COMPUTERS vol. C-21, no. 8 , August 1972 , NEW YORK, USA. pages 837 - 847 C. RAMAMOORTHY ET AL. 'Some Properties of iterative Square-Rooting Methods Using High-Speed Multiplication'
- IBM TECHNICAL DISCLOSURE BULLETIN. vol. 36, no. 7 , July 1993 , NEW YORK US pages 517 - 518 XP000383720 'Effcient Method to Compute Reciprocal and Riciprocal Square Root in RISC Processors'

## Description

The present invention relates to a reciprocal value calculating method and circuit which can be used in an amplitude normalizing circuit of a modem or the like, e.g. for calculating a reciprocal value of an amplitude of an input vector signal.

In recent years, miniaturization and price reduction of modems have been sought as data communication over telephone lines has become more popular. Therefore, simplification of modem circuitry is necessary.

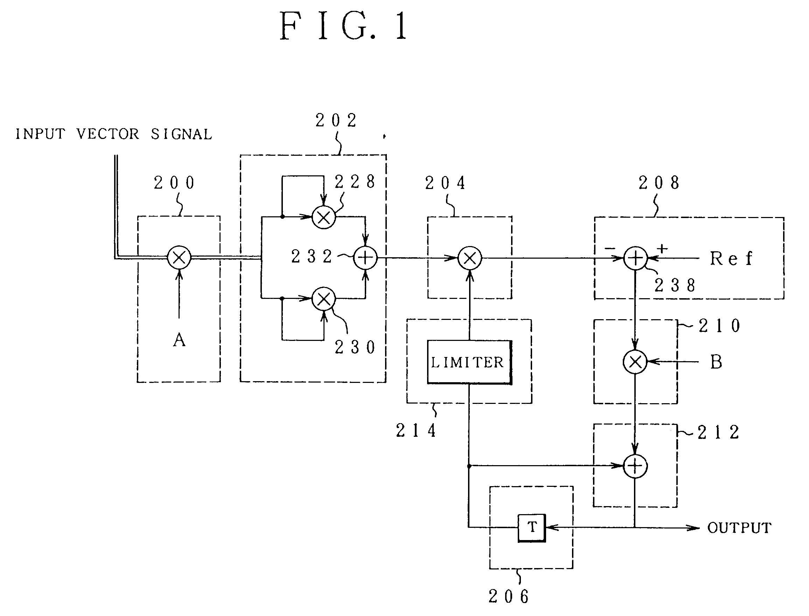

Fig. 1 shows a previously-proposed circuit for obtaining a reciprocal value, as used in a modem. It comprises:-
an overflow preventing circuit 200,
a power operating (calculating) circuit 202,
a multiplying circuit 204,
a tap value generating circuit 206,
a differential circuit 208,
a limiter circuit 214,
a loop gain adjusting circuit 210, and
an updating circuit 212.

The operation of this reciprocal number arithmetic operating circuit will now be described. First, in order to prevent a signal overflow by an arithmetic operation, by multiplying a constant (A) to an input vector signal (X + jY), an input signal (X + jY)•A whose level was reduced is obtained in the overflow preventing circuit 200. Subsequently, the square of a real component and an imaginary component is obtained by each of multiplying circuits 228 and 230 in the power operating circuit 202, and those squares are added by an adder 232, thereby obtaining a power value (X² + Y²)•A².

On the other hand, a predetermined initial value has been set as a tap value (K) into the tap value generating circuit 206. The result which is obtained by updating the tap value (K) indicates a reciprocal number of an amplitude value of an input vector signal which is finally obtained. An output signal from the power operating circuit 202 is multiplied to the tap value (K) obtained through the limiter circuit 214 by the multiplying circuit 204 and the resultant value is supplied to the differential circuit 208. A predetermined reference (Ref) has been preset into the differential circuit 208. An error signal (ΔK) is obtained as follows by an adder 238.${\text{ΔK = Ref - K•(X}}^{\text{2}} {\text{+ Y}}^{\text{2}} {\text{)•A}}^{\text{2}}$

The error signal (ΔK) obtained by the differential circuit 208 is multiplied with a constant (B) for setting a loop gain to 1.0 or less by the loop gain adjusting circuit 210. After that, the resultant value is supplied to the updating circuit 212 and is added to the tap value (K), thereby updating as follows.$\text{K = K + ΔK}$

In this instance, in order to set the value (ΔK) which is obtained by the differential circuit 208 to 0, a loop process in which processes by the multiplying circuit 204, differential circuit 208, loop gain adjusting circuit 210, and updating circuit 212 are repeated several times is executed. The tap value (K) which is obtained when the error signal is converged to a presumed value is generated as a reciprocal number value of the amplitude of the input vector signal (X + jY).

On the other hand, the reciprocal number value of the amplitude of the input vector signal (X + jY) which is obtained by the reciprocal number arithmetic operating circuit should be inherently equal to 1/√(X² + Y²). However, in the reciprocal number arithmetic operating circuit shown in Fig. 1, since the tap value (K) of the reciprocal number value to be obtained is multiplied only once, the reciprocal number value is equal to 1/(X² + Y²). Therefore, when the user tries to obtain the accurate reciprocal number value, the processing time and number of arithmetic operations required increase.

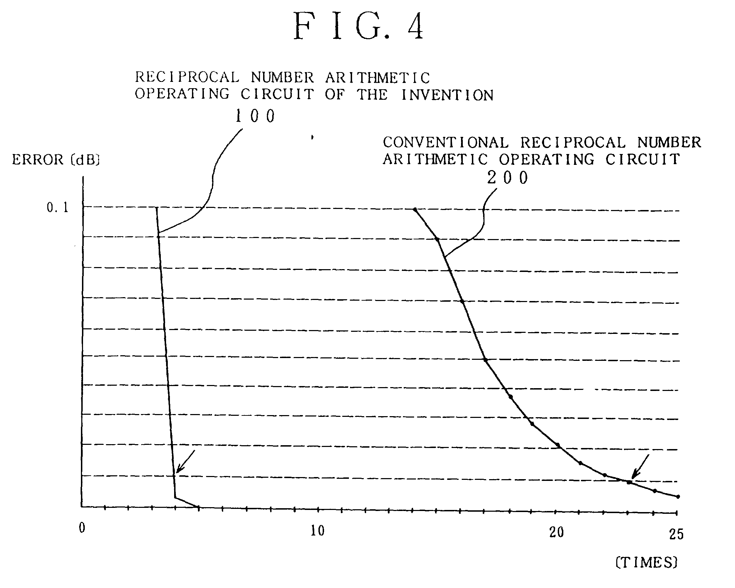

A graph 200 in Fig. 4 shows the number of repetitions of the loop needed until the error reduces to a predetermined level. If an allowable error of the obtained reciprocal number value is set to, for example 0.01 dB or less, the loop process performed by the multiplying circuit 204, differential circuit 208, loop gain adjusting circuit 210, and updating circuit 212 must be repeated 24 times. This means that both the converging time and the number of operations are too large.

The above-described circuit of Figure 1 is in accordance with the preamble of each of the accompanying independent claims.

Elektronik, Vol. 34, no. 22, October 1985, München, Germany, includes an article "FractionalArithmetik" by R. Wollenberg et al, which discusses a fractional number format for use on 16-bit microprocessors, and includes an illustration of how this format can be used to calculate a vector magnitude from three components.

According to a first aspect of the invention, a method is provided for calculating a reciprocal number value of an amplitude of an input vector signal, comprising: an overflow preventing step of multiplying a constant (A) to reduce a level of the input vector signal (X - jY) as necessary in order to prevent an overflow of the signal by an arithmetic operation; a power calculating step for calculating the square of a real component and the square of an imaginary component of the input vector signal whose level was reduced in said overflow preventing step and adding them, thereby obtaining a power value (X² + Y²); a tap value generating step of generating a tap value (K) as said reciprocal number value to be obtained; a multiplying step of multiplying the tap value (K) from said tap value generating step by an output signal in said power calculating step; a differential step of subtracting a multiplication signal obtained in said multiplying step from a predetermined reference (Ref), thereby obtaining an error signal (ΔK); an updating step of adding the error signal to the tap value (K) generated in said tap value generating step, thereby updating the error signal (ΔK) which is obtained in the differential step so as to be 0; and a loop processing step of repeating a loop consisting of the multiplying step, differential step, and updating step and for generating the tap value (K) obtained in the tap value generating step as said reciprocal number value in the case where the error signal (ΔK) obtained in the differential step is equal to or less than a predetermined value;
characterised in that, in said multiplying step, the output signal in said power calculating step is multiplied by the tap value (K) from said tap value generating step two times.

According to a second aspect of the invention, there is provided a reciprocal number calculating circuit for calculating a reciprocal number value of an amplitude of an input vector signal, comprising; overflow preventing means for multiplying an input vector signal (X - jY) by a constant (A), to reduce the level of the input vector signal as necessary to prevent an overflow of the signal by an arithmetic operation; power calculating means for calculating the square of a real component and the square of an imaginary component of the level-reduced input vector signal output from said overflow preventing means and adding them, thereby obtaining a power value (X² + Y²); tap means for setting a tap value (K) as a reciprocal number value to be obtained; multiplying means for multiplying a value based on the tap value (K) of said tap means to an output signal of said power calculating means; differential calculating means for subtracting an output signal of said multiplying means from a predetermined reference (Ref), thereby obtaining an error signal (ΔK) ; updating means for adding the error signal (ΔK) to the tap value (K) from the tap means and for updating the error signal (ΔK) from the differential calculating means so as to be 0; and loop processing means for repeating a loop consisting of the sequential operation of the multiplying means, differential calculating means, and updating means, and for outputting the tap value (K) obtained in the tap value generating means as a reciprocal number value in the case where the error signal (ΔK) obtained in the differential calculating means is equal to or less than a predetermined value; characterised in that said multiplying means multiplies an output signal of said power calculating means by the tap value (K) of said tap means two times.

Thus, the present invention can provide a reciprocal value calculating method, and a circuit for implementing such a method, in which the reciprocal of the amplitude of an input vector signal can be obtained by a small number of operations and in a short time.

An embodiment of the invention calculates the reciprocal number value of an amplitude of an input vector signal (X + jY), having a real component (X) and an imaginary component (Y), in the following way. First, in order to prevent a signal overflow in subsequent arithmetic operations, it is preferable that a level-reducing constant (A) is multiplied with the input vector signal (X + jY). As this constant (A), a value of 1/√2 can be used, for example. Subsequently, the square of the real component and the square of the imaginary component of the reduced-level input vector signal are obtained and added, thereby obtaining a power value (power signal) (X² + Y²).

As a current estimate of the reciprocal value to be obtained, a tap value (K) is used. Initially, the tap value (K) is set to a predetermined value, for example 0.7559. The power value (X² + Y²), obtained by the power arithmetic operation, is multiplied by the square of the tap value (K), for example by twice multiplying it by the tap value K. Subsequently, a multiplication signal K²(X² + Y²) is subtracted from a predetermined reference value (Ref), thereby obtaining the error signal (ΔK). As the reference value (Ref), for example, 1/2 is used. In order to adjust the loop gain, the tap value (K) is multiplied by the error signal (ΔK). The error signal in which the loop gain was adjusted is added to the tap value (K) generated in the tap step, thereby updating the tap value and reducing the error signal.

When the error signal (ΔK) is found to be equal to or less than the predetermined value, after repeating in a loop the arithmetic operations such as multiplication of (K²), calculation of the difference (ΔK), loop gain adjustment, and updating of the tap value (K) mentioned above, the tap value (K) at that time is obtained as the desired reciprocal number value.

It is also possible to adjust the loop gain by multiplying the square (K²) of the tap value (K) with the error signal (ΔK).

As a result, the reciprocal of the input vector signal can be obtained with a high precision by a small number of operations and in a short time. Further, since the circuit itself can be simplified, a miniaturized and low-cost apparatus can also be realized.

Reference is made, by way of example, to the accompanying drawings, in which:-
Fig. 1 is a block diagram of a previously-proposed circuit;
Fig. 2 is a block diagram showing a fundamental embodiment of the invention;
Fig. 3 is a circuit block diagram showing a specific embodiment of the invention which is realized by a digital signal processor;
Fig. 4 is an explanatory diagram showing the number of loop processes needed to converge the error to a specific error by comparing the circuit according to the invention and the previously-proposed circuit;
Fig. 5 is a circuit block diagram showing another embodiment of the invention;
Fig. 6 is a block diagram showing a modem in which a reciprocal number arithmetic operating circuit of the invention is used.

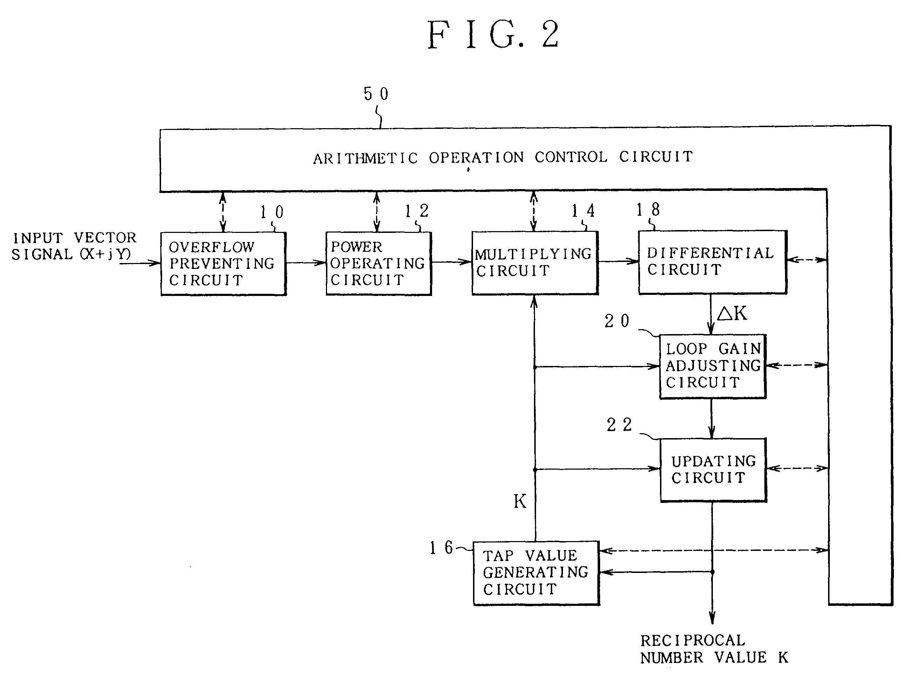

Fig. 2 shows a fundamental embodiment of the invention. A reciprocal number arithmetic operating circuit of the invention arithmetically derives a reciprocal number value${\text{1/√(X}}^{\text{2}} {\text{+ Y}}^{\text{2}} \text{)}$ of the amplitude of an input vector signal (X + jY). The circuit comprises: an overflow preventing circuit 10; a power operating circuit 12; a multiplying circuit 14; a tap value generating circuit 16; a differential circuit 18; a loop gain adjusting circuit 20; and an updating circuit 22. A whole arithmetic operating procedure of an arithmetic operation control circuit 50 and the setting of an initial value are executed.

The overflow preventing circuit 10 multiplies a constant (A) to reduce the level of the input vector signal (X + jY) in order to prevent an overflow of the signal due to the arithmetic operation. As a value of the constant (A), 1/√2 is used. The power arithmetic operating circuit 12 calculates the square of a real component and the square of an imaginary component of an output signal of the overflow preventing circuit 10 and adds them, thereby obtaining a power (X² + Y²). The tap value generating circuit 16 sets the tap value (K) as a reciprocal number value and an initial value of the tap value is set to 0.7559. The multiplying circuit 14 multiplies the tap value (K) from the tap value generating circuit 16 with an output signal from the power arithmetic operating circuit 12 two times, thereby obtaining K²•(X² + Y²) .

The differential circuit 18 subtracts an output signal of the multiplying circuit 14 from the predetermined reference (Ref), thereby obtaining the error signal (ΔK). As a value of the reference (Ref), 1/2 is used. The loop gain adjusting circuit 20 multiplies the tap value (K) from the tap circuit 16 with the error signal (ΔK) of the differential circuit 18 in order to set the loop gain to be constant.

Further, the updating circuit 22 adds the error signal (ΔK) obtained through the loop gain adjusting circuit 20 to the tap value (K) from the tap value generating circuit 16, thereby updating the error signal (ΔK) from the differential circuit 18 so as to approach zero.

The principle of the reciprocal number arithmetic operating process in Fig. 2 will now be described. For instance, assuming that the input vector signal is set to (X + jY), since the constant (A) of the level down is$\text{A = 1√2}$ Then, the output signal of the overflow preventing circuit 10 is$\text{(X + jY)/√2}$ The result of the arithmetic operation of the power arithmetic operating circuit 12 is${\text{(X}}^{\text{2}} {\text{+ Y}}^{\text{2}} \text{)/2}$ Assuming that the tap value of the reciprocal number value to be obtained is set to K, the processing result of the multiplying circuit 14 is${\text{K}}^{\text{2}} {\text{(X}}^{\text{2}} {\text{+ Y}}^{\text{2}} \text{)/2}$ Further, the error signal (ΔK) to be obtained by the differential circuit is${\text{ΔK = 1/2 - K}}^{\text{2}} {\text{(X}}^{\text{2}} {\text{+ Y}}^{\text{2}} \text{)/2}$

The error signal (ΔK) from the differential circuit 18 is supplied to the loop gain adjusting circuit 20. The loop gain adjusting circuit 20 multiplies the tap value (K) with the error signal (ΔK) and obtains an adjusted error signal (K'), supplied to the next updating circuit 22. The updating circuit 22 adds the tap value (K) to the error signal (ΔK') whose loop gain was adjusted by the loop gain adjusting circuit 20 and updates the result of the addition as a new tap value (K) of the tap value generating circuit 16. The loop process by the multiplying circuit 14, differential circuit 18, loop gain adjusting circuit 20, and updating circuit 22 is repeated by only a predetermined number of times. The tap value (K) just after the completion of the execution of the loop process of a repetition number of times is set to an output of a reciprocal number value to be obtained.

That is, a loop process is executed to make the error signal (ΔK) which is given by the equation (1) approach 0 as close as possible. In the case where ΔK = 0 in the equation (1), the following equation is satisfied.${\text{1/2 - K}}^{\text{2}} {\text{(X}}^{\text{2}} {\text{+ Y}}^{\text{2}} \text{)/2 = 0}$

By solving the equation (2),${\text{K}}^{\text{2}} {\text{(X}}^{\text{2}} {\text{+ Y}}^{\text{2}} \text{)/2 = 1/2} {\text{K}}^{\text{2}} {\text{(X}}^{\text{2}} {\text{+ Y}}^{\text{2}} \text{) = 1} {\text{K}}^{\text{2}} {\text{= 1/(X}}^{\text{2}} {\text{+ Y}}^{\text{2}} \text{)} {\text{K = 1/√(X}}^{\text{2}} {\text{+ Y}}^{\text{2}} \text{)}$ Therefore, in the reciprocal number arithmetic operating circuit of the invention, the reciprocal number value of the amplitude for the input vector signal can be accurately obtained.

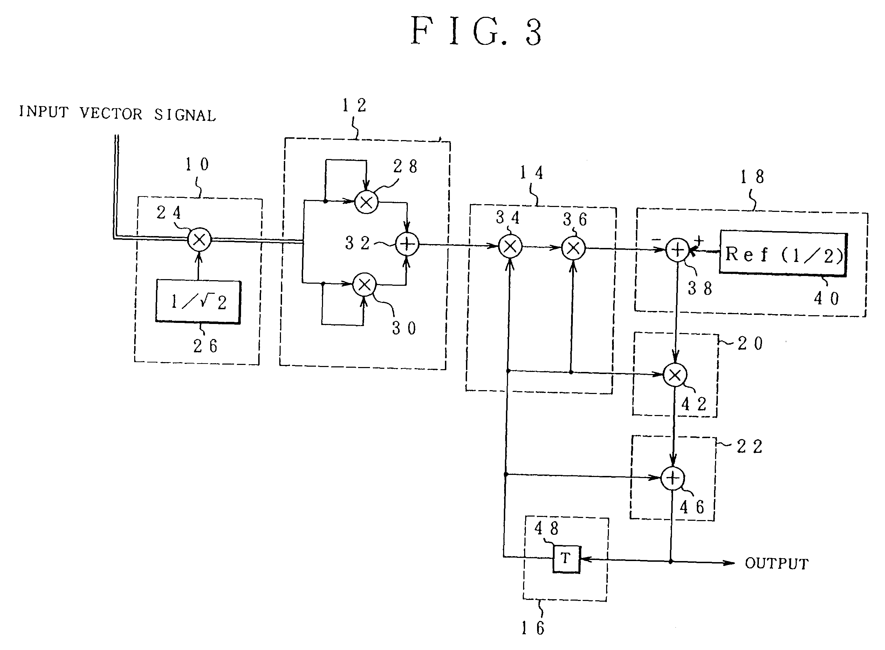

Fig. 3 shows a specific embodiment of the invention and relates to the case where the circuit is realized by a digital signal processor having a vector arithmetic operating function.

In Fig. 3, a multiplier 24 and a constant setting device 26 are provided for the overflow preventing circuit 10. The multiplier 24 multiplies the input vector signal (X + jY) by a constant (A) to reduce the level for preventing a signal overflow due to the arithmetic operation from the constant setting device 26.

As a constant (A), (A) = 1/√2 is used, for example.

In the power arithmetic operating circuit 12, the square of the real component and the square of the imaginary component of the input vector signal(X + jY)/√2 whose level was reduced by the overflow preventing circuit 10 are obtained and added. For this, multipliers 28 and 30 and an adder 32 are provided for the power arithmetic operating circuit 12. The multiplier 28 squares the real component of the input vector signal. The multiplier 30 squares the imaginary component of the input vector signal. The adder 32 adds the square of the real component from the multiplier 28 and the square of the imaginary component from the multiplier 30.

The multiplying circuit 14 multiplies the tap value (K) from the tap value generating circuit 16 with the output signal from the power arithmetic operating circuit 12 two times, thereby obtaining${\text{K}}^{\text{2}} {\text{(X}}^{\text{2}} {\text{+ Y}}^{\text{2}} \text{)/2}$ Namely, by using the multipliers 34 and 36, the tap value (K) is multiplied twice.

The differential circuit 18 has an adder 38 and a constant setting device 40 and subtracts the multiplication result of the multiplier 14 from the reference (Ref) set by the constant setting device 40, thereby obtaining the error signal (ΔK). As a value of the reference (Ref) which is set by the constant setting device 40, 1/2 is used. Therefore, the differential circuit 18 generates${\text{ΔK = 1/2 - K}}^{\text{2}} {\text{(X}}^{\text{2}} {\text{+ Y}}^{\text{2}} \text{)/2}$ as an error signal (ΔK).

The reasons why the constant (A) = 1/√2 is multiplied by the overflow circuit 10 and the reference (Ref) = 1/2 is used in the differential circuit 18 will now be described. The maximum value of the input vector signal which can be handled by the digital signal processor to realize the reciprocal number arithmetic operating circuit of the invention is equal to 2. It is necessary that the output from the power arithmetic operating circuit 12 to calculate the square is set to a value less than 2. Due to this, in the overflow preventing circuit 10, 1/√2 is multiplied to the input vector signal by the power arithmetic operating circuit 12 as a constant (A) which is set to 1/2 by being squared. The reference (Ref) which is used in the differential circuit 18 is set to (Ref) = 1/2 in accordance with the constant (A) = 1/√2 which is multiplied by the overflow preventing circuit 10.

In the loop gain adjusting circuit 20, the tap value (K) from a tap 48 provided for the tap value generating circuit 16 is multiplied with the error signal (ΔK) from the differential circuit 18 by a multiplier 42, thereby holding the loop gain constant. Further, the updating circuit 22 has an adder 46 and adds the error signal (ΔK) obtained through the loop gain adjusting circuit 20 to the tap value (K) generated at present by the tap value generating circuit 16, thereby updating the tap value (K).

In the embodiment of Fig. 3, in order to converge the error signal (ΔK) which is generated from the differential circuit 18 to 0, the loop process by the multiplying circuit 14, differential circuit 18, loop gain adjusting circuit 20, and updating circuit 22 is repeated for one inputting operation of the input vector signal (X + jY).

As an initial value which is set into the tap 48 of the tap value generating circuit 16, a value in which the error (ΔK) of the reciprocal number value that is obtained by the reciprocal number arithmetic operating circuit is most rapidly converged to 0.01 dB or less is experimentally obtained as follows.
I. A value of 0.5 to 2.0 is supplied as an input to the reciprocal number arithmetic operating circuit on a unit basis of 0.01 (i.e. adjusted in steps of 0.01) and an error between the output result (obtained reciprocal number value) just after the circuit was looped five times and the ideal reciprocal number value obtained from the input value in this instance by the calculation, is obtained with respect to all of the inputs.
II. The maximum error among the errors obtained in the above item I is derived.
III. The processes of the above items I and II are executed with respect to a range of the initial value of the tap of 0.5 to 2.0 on a unit basis of 0.01.
IV. The initial value of the tap giving a minimum error among the maximum errors obtained in the item III is obtained.

By such experimental processes, the initial value which is set into the tap 48 of the tap value generating circuit 16 is determined as 0.7559, for example. By setting this value (0.7559) into the tap 48, when the loop process by the multiplier 14, differential circuit 18, loop gain adjusting circuit 20, and updating circuit 22 is repeated 5 times, the error (ΔK) of the reciprocal value obtained by the circuit can be converged to 0.01 dB or less.

Fig. 4 shows the performances of the reciprocal number calculating circuit of this embodiment and of the previous proposal described above, for the same input vector signal (X + jY). The ordinate represents the error (ΔK) in the obtained reciprocal number value, and the abscissa indicates the number of repetitions of the loop.

In Fig. 4, as shown by curve 100 obtained with the circuit of this embodiment, by repeating the loop process five times, the error can be reduced to 0.01 dB or less. On the other hand, in the previously-proposed circuit, the loop must be repeated 24 times to achieve the same accuracy. Therefore, the circuit of this embodiment can obtain the reciprocal value in only a few operations and in a short time.

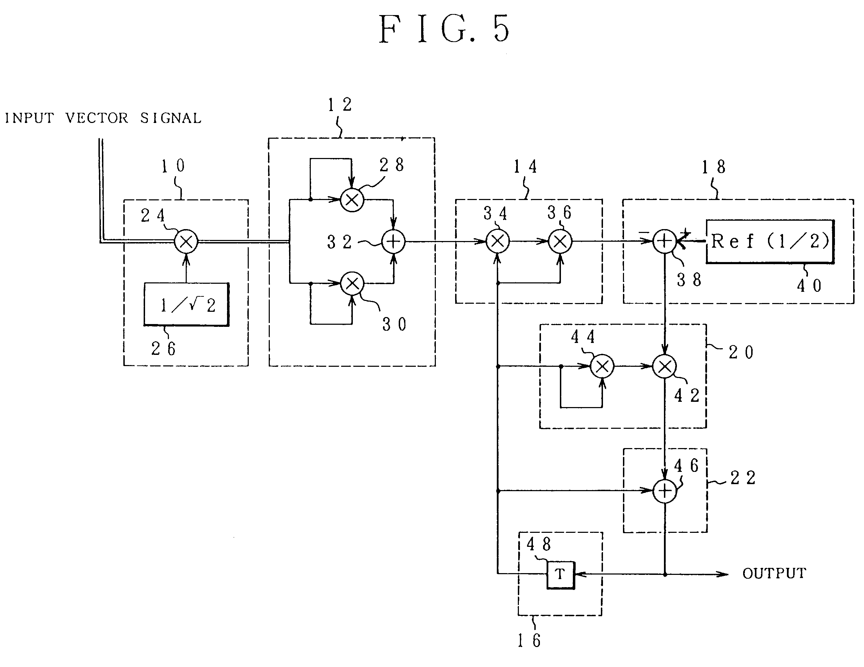

Fig. 5 shows another embodiment of the invention. The embodiment is characterized in that in the loop gain adjusting circuit 20, the error signal (ΔK) is multiplied by the square (K²) of the tap value (K) in order to adjust the loop gain.
Namely, the loop gain adjusting circuit 20 has multipliers 42 and 44. The multiplier 44 squares the tap value (K) and the multiplier 42 multiplies the resultant value with the error signal (ΔK). The other construction is substantially the same as the embodiment of Fig. 3. By raising an adjustment degree of the loop gain as mentioned above, the number of times of the loop arithmetic operations for converging the error signal (ΔK) to 0 can be further reduced and the reciprocal number arithmetic operation of a higher speed as compared with that in the embodiment of Fig. 3 can be realized.

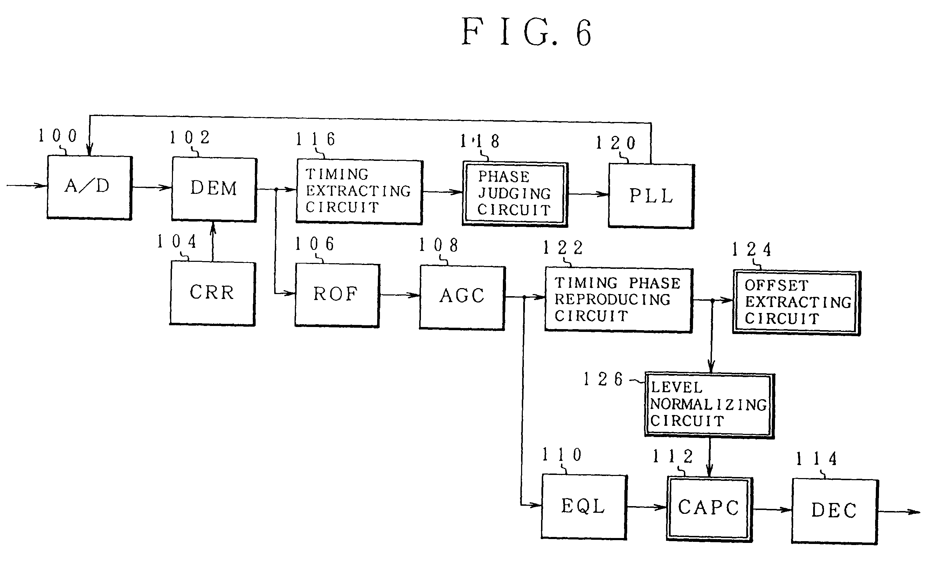

Fig. 6 shows a modem in which a reciprocal number arithmetic operating circuit of the invention is used. A main signal demodulation system in the modem comprises: an A/D converter 100; a demodulate circuit 102; a carrier generating circuit 104; a roll off filter 106; an AGC circuit 108; an automatic equalizer 110; a carrier automatic phase control circuit 112; and a decode circuit 114. In order to synchronize a sampling clock which is used in the A/D converter 100, a timing extracting circuit 116, a phase judging circuit 118, and a PLL circuit 120 are provided.

Further, in order to set an initial value of a frequency offset into the carrier automatic phase control circuit 112 at the time of pull-in by training, a timing phase reproducing circuit 122, an offset extracting circuit 124, and a level normalizing circuit 126 are provided.

In the modem as mentioned above, the reciprocal number arithmetic operating circuit of the invention is used by the carrier automatic phase control circuit 112, phase judging circuit 118, offset extracting circuit 124, and level normalizing circuit 126 which are shown in a block of double frames. Namely, since the amplitude of the vector signal is unnecessary in the carrier automatic phase control circuit 112, phase judging circuit 118, and offset extracting circuit 124, the reciprocal number arithmetic operating circuit of the invention is used to normalize the vector signal in a phase plane to a circle having a radius of 1.0.

In the level normalizing circuit 126, the reciprocal number arithmetic operating circuit of the invention is used for the purpose of the level normalization to instantaneously set a reception signal level to a certain predetermined value. The position at which the reciprocal number arithmetic operating circuit of the invention is used is of course not limited to that shown in Fig. 4. Rather, the circuit can be used in any appropriate circuit which needs the reciprocal number value of the input vector signal.

With respect to the embodiment of Fig. 3, a simplified circuit can be also constructed by omitting the loop gain adjusting circuit 20.

According to the invention as mentioned above, the reciprocal number value for the input vector signal can be obtained at a high precision, by using few arithmetic operations, and in a short time. Further, since the circuit itself can be simplified, miniaturisation and low cost of the apparatus can be also realised.

Although the above embodiment has been described with respect to a hardware of the vector arithmetic operating circuit which is realised by the digital signal processor as an example, such a construction can be also realised by a program control as a reciprocal number arithmetic operating method which realises a step of the vector arithmetic operation by the digital signal processor.

Further, the invention is not limited by numerical values shown in the embodiments.

## Claims

1. A method for calculating a reciprocal number value of an amplitude of an input vector signal, comprising:
an overflow preventing step of multiplying a constant (A) to reduce a level of the input vector signal (X - jY) as necessary in order to prevent an overflow of the signal by an arithmetic operation;
a power calculating step of calculating the square of a real component the square of a real component and the square of an imaginary component of the input vector signal whose level was reduced in said overflow preventing step and adding them, thereby obtaining a power value (X² + Y²) ;
a tap value generating step of generating a tap value (K) as said reciprocal number value to be obtained;
a multiplying step of multiplying the tap value (K) from said tap value generating step by an output signal in said power arithmetic operating step;
a differential step of subtracting a multiplication signal obtained in said multiplying step from a predetermined reference (Ref), thereby obtaining an error signal (ΔK) ;
an updating step of adding the error signal to the tap value (K) generated in said tap value generating step, thereby updating the error signal (ΔK) which is obtained in the differential step so as to be 0; and
a loop processing step of repeating a loop consisting of the multiplying step, differential step, and updating step and for generating the tap value (K) obtained in the tap value generating step as said reciprocal number value in the case where the error signal (ΔK) obtained in the differential step is equal to or less than a predetermined value;
characterised in that, in said multiplying step, the output signal in said power calculating step is multiplied by the tap value (K) from said tap value generating step two times.

2. A method according to claim 1, characterised in that there is further provided a loop gain adjusting step of multiplying the error signal (ΔK) determined in said differential step by the tap value (K) of said tap value generating step and supplying the resultant product to said updating step to achieve a certain loop gain.

3. A method according to claim 1, characterised in that there is further provided a loop gain adjusting step of multiplying the error signal (ΔK) determined in said differential step by the square (K²) of the tap value (K) of said tap value generating step and supplying the resultant product to said updating step to achieve a certain loop gain.

4. A reciprocal number arithmetic operating method according to claim 1, characterised in that the initial value of the tap value (K) generated in said tap value generating step is set to 0.7559.

5. A reciprocal number arithmetic operating method according to claim 1, characterised in that a value of the constant (A) which is multiplied in said overflow preventing step is set to 1/√2, and a value of the reference (Ref) which is used in said differential step is set to 1/2.

6. A reciprocal number calculating circuit for calculating a reciprocal number value of an amplitude of an input vector signal, comprising;
overflow preventing means (10) for multiplying an input vector signal (X - jY) by a constant (A), to reduce the level of the input vector signal as necessary to prevent an overflow of the signal by an arithmetic operation;
power calculating means (12) for calculating the square of a real component and the square of an imaginary component of the level-reduced input vector signal output from said overflow preventing means (10) and adding them, thereby obtaining a power value (X² + Y²) ;
tap means (16) for setting a tap value (K) as a reciprocal number value to be obtained;
multiplying means (14) for multiplying a value based on the tap value (K) of said tap means to an output signal of said power calculating means (12);
differential calculating means (18) for subtracting an output signal of said multiplying means (14) from a predetermined reference (Ref), thereby obtaining an error signal (ΔK) ;
updating means (22) for adding the error signal (ΔK) to the tap value (K) from the tap means (16) and for updating the error signal (ΔK) from the differential calculating means (18) so as to be 0; and
loop processing means (50) for repeating a loop consisting of the sequential operation of the multiplying means (14), differential calculating means (18), and updating means (22), and for outputting the tap value (K) obtained in the tap value generating means (16) as a reciprocal number value in the case where the error signal (ΔK) obtained in the differential calculating means (18) is equal to or less than a predetermined value;
characterised in that said multiplying means (14) multiplies an output signal of said power calculating means (12) by the tap value (K) of said tap means two times.

7. A circuit according to claim 6, characterised in that there is further provided loop gain adjusting means (20) for multiplying the error signal (ΔK) from said differential means (18) by the tap value (K) from said tap means (16) and supplying the resultant product to said updating means (22) to achieve a certain loop gain.

8. A circuit according to claim 6, characterised in that there is further provided loop gain adjusting means (20) for multiplying the error signal (ΔK) from said differential calculating means (18) by the square (K²) of the tap value (K) from said tap means (16) and supplying the resultant product to said updating means (22) to achieve a certain loop gain.

9. A circuit according to claim 6, characterized in that an initial value of the tap value (K) which is generated in the tap means (16) is set to 0.7559.

10. A circuit according to claim 6, characterised in that the value of the constant (A) which is multiplied by said overflow preventing means (10) is set to 1/√2 and the value of the reference (Ref) in said differential calculating means (18) is set to 1/2.

## Patentansprüche

1. Verfahren zum Berechnen eines Reziprokzahlwertes einer Amplitude eines Eingangsvektorsignals, mit:
einem einen Überlauf verhindernden Schritt gemäß einer Multiplikation mit einer Konstanten (A), um einen Pegel des Eingangsvektorsignals (X - jY) in der erforderlichen Weise zu reduzieren, um einen Überlauf des Signals durch eine arithmetische Operation zu verhindern;
einem Potenzberechnungsschritt zum Berechnen des Quadrates einer realen Komponente und zum Berechnen des Quadrates einer imaginären Komponente eines Eingangsvektorsignals, dessen Pegel bei dem Überlaufverhinderungsschritt reduziert worden ist, und zum Addieren derselben, wodurch ein Potenzwert (X² + Y²) erhalten wird;
einem Abgriffswert-Erzeugungsschritt zum Erzeugen eines Abgriffswertes (K) als den Reziprokzahlwert, der abzuleiten ist;
einem Multiplizierschritt gemäß einem Multiplizieren des Abgriffswertes (K) von dem Abgriffswert-Erzeugungsschritt mit einem Ausgangssignal in dem arithmetischen Potenzberechnungsschritt;
einem Differenzschritt gemäß einem Subtrahieren des Multiplikationssignals, welches bei dem Multiplizierschritt erhalten wurde, von einer vorbestimmten Bezugsgröße (Ref), wodurch ein Fehlersignal (ΔK) erhalten wird;
einem Erneuerungsschritt gemäß dem Addieren des Fehlersignals zu dem Abgriffswert (K), der in dem Abgriffswert-Erzeugungsschritt erzeugt wurde, wodurch das Fehlersignal (ΔK) erneuert wird, welches bei dem Differenzschritt erhalten wurde, so daß es zu 0 wird; und
einem Schleifenverarbeitungsschritt gemäß dem Wiederholen einer Schleife, die aus dem Multiplizierschritt, dem Differenzschritt und dem Erneuerungsschritt besteht, und um den Abgriffswert (K) zu erzeugen, der bei dem Abgriffswert-Erzeugungsschritt erhalten wurde, und zwar als der Reziprokzahlwert in dem Fall, bei dem das Fehlersignal (ΔK), welches in dem Differenzschritt erhalten wurde, gleich ist mit oder kleiner ist als ein vorbestimmter Wert;
dadurch gekennzeichnet, daß bei dem Multiplizierschritt das Ausgangssignal bei dem Potenzberechnungsschritt mit dem Abgriffswert (K) aus dem Abgriffswert-Erzeugungsschritt zweimal multipliziert wird.

2. Verfahren nach Anspruch 1, dadurch gekennzeichnet, daß ferner ein Schleifenverstärkungseinstellschritt vorgesehen ist gemäß einem Multiplizieren des Fehlersignals (ΔK), welches bei dem Differenzschritt bestimmt wurde, mit dem Abgriffswert (K) des Abgriffswert-Erzeugungsschrittes, und daß das resultierende Produkt dem Erneuerungsschritt zugeleitet wird, um eine bestimmte Schleifenverstärkung zu erzielen.

3. Verfahren nach Anspruch 1, dadurch gekennzeichnet, daß ferner ein Schleifenverstärkungseinstellschritt gemäß dem Multiplizieren des Fehlersignals (ΔK), welches bei dem Differenzschritt festgelegt wurde, mit dem Quadrat (K²) des Abgriffswertes (K) des Abgriffswert-Erzeugungsschrittes vorgesehen ist und daß das resultierende Produkt dem Erneuerungsschritt zugeleitet wird, um eine bestimmte Schleifenverstärkung zu erzielen.

4. Arithmetisches Reziprokzahl-Operationsverfahren nach Anspruch 1, dadurch gekennzeichnet, daß der Anfangswert des Abgriffswertes (K), der bei dem Abgriffswert-Erzeugungsschritt erzeugt wird, eingestellt wird auf 0,7559.

5. Arithmetisches Reziprokzahl-Operationsverfahren nach Anspruch 1, dadurch gekennzeichnet, daß ein Wert der Konstanten (A), die in dem Überlaufverhinderungsschritt multipliziert wird, auf 1/√2 eingestellt ist, und daß ein Wert der Bezugsgröße (Ref), der bei dem Differenzschritt verwendet wird, eingestellt ist auf 1/2.

6. Reziprokzahl-Berechnungsschaltung zum Berechnen eines Reziprokzahlwertes einer Amplitude eines Eingangsvektorsignals, mit:
einer einen Überlauf verhindernden Einrichtung (10) zum Multiplizieren eines Eingangsvektorsignals (X - jY) mit einer Konstanten (A), um den Pegel des Eingangsvektorsignals in der erforderlichen Weise zu reduzieren, um einen Überlauf des Signals durch eine arithmetische Operation zu verhindern;
einer Potenzberechnungseinrichtung (12) zum Berechnen des Quadrates einer realen Komponente und zum Berechnen des Quadrates einer imaginären Komponente des im Pegel reduzierten Eingangsvektorsignals, welches von der Überlaufverhinderungseinrichtung (10) ausgegeben wird, und zum Addieren derselben, wodurch ein Potenzwert (X² + Y²) erhalten wird;
eine Abgriffseinrichtung (16) zum Einstellen eines Abgriffswertes (K) (tap value) als ein Reziprokzahlwert, der abzuleiten ist;
einer Multipliziereinrichtung (14) zum Multiplizieren eines Wertes basierend auf dem Abgriffswert (K) der Abgriffseinrichtung mit einem Ausgangssignal der Potenzberechnungseinrichtung (12);
einer Differenzberechnungseinrichtung (18) zum Subtrahieren eines Ausgangssignals der Multipliziereinrichtung (14) von einer vorbestimmten Bezugsgröße (Ref), wodurch ein Fehlersignal (ΔK) erhalten wird;
einer Erneuerungseinrichtung (22) zum Addieren des Fehlersignals (ΔK) zu dem Abgriffswert (K) von der Abgriffseinrichtung (16) und zum Erneuern des Fehlersignals (ΔK) von der Differenzberechnungseinrichtung (18), so daß dieses zu 0 wird; und
einer Schleifenverarbeitungseinrichtung (50) zum Wiederholen einer Schleife, die aus der sequentiellen Operation der Multipliziereinrichtung (14), der Differenzberechnungseinrichtung (18) und der Erneuerungseinrichtung (22) besteht, und um den Abgriffswert (K), der in der Abgriffswert-Erzeugungseinrichtung (16) erhalten wurde, als einen Reziprokzahlwert für den Fall auszugeben, bei dem das Fehlersignal (ΔK), welches in der Differenzberechnungseinrichtung (18) erhalten wurde, gleich ist mit oder kleiner ist als ein vorherbestimmter Wert;
dadurch gekennzeichnet, daß die Multipliziereinrichtung (14) ein Ausgangssignal der Potenzberechnungseinrichtung (12) mit dem Abgriffswert (K) der Abgriffseinrichtung zweimal multipliziert.

7. Schaltung nach Anspruch 6, dadurch gekennzeichnet, daß eine eine Schleifenverstärkung einstellende Einrichtung (20) vorgesehen ist, um das Fehlersignals (ΔK) von der Differenzeinrichtung (18) mit dem Abgriffswert (K) von der Abgriffeinrichtung (16) zu multiplizieren und um das resultierende Produkt zu der Erneuerungseinrichtung (22) zuzuführen, um eine bestimmte Schleifenverstärkung zu erzielen.

8. Schaltung nach Anspruch 6, dadurch gekennzeichnet, daß ferner eine eine Schleifenverstärkung einstellende Einrichtung (20) vqrgesehen ist, um das Fehlersignals (ΔK) von der Differenzberechnungseinrichtung (18) mit dem Quadrat (K²) des Abgriffswertes (K) von der Abgriffeinrichtung (16) zu multiplizieren und um das resultierende Produkt der Erneuerungseinrichtung (22) zuzuführen, um eine bestimmte Schleifenverstärkung zu erzielen.

9. Schaltung nach Anspruch 6, dadurch gekennzeichnet, daß der Anfangswert des Abgriffswertes (K), der in der Abgriffeinrichtung (16) erzeugt wird, auf 0,7559 eingestellt ist.

10. Schaltung nach Anspruch 6, dadurch gekennzeichnet, daß ein Wert der Konstanten (A), der durch die den Überlauf verhindernde Einrichtung (10) multipliziert wird, auf 1/√2 eingestellt ist, und daß ein Wert der Bezugsgröße (Ref) in der Differenzberechnungseinrichtung (18) auf 1/2 eingestellt ist.

## Revendications

1. Procédé pour calculer une valeur de nombre inverse d'une amplitude d'un signal vectoriel d'entrée, comprenant :
une étape d'empêchement de dépassement de capacité de multiplication d'une constante (A) pour réduire un niveau du signal vectoriel d'entrée (X - jY) si nécessaire afin d'empêcher un dépassement de capacité du signal par une opération arithmétique ;
une étape de calcul de puissance du calcul du carré de la composante réelle et du carré de la composante imaginaire du signal vectoriel d'entrée dont le niveau a été réduit dans ladite étape d'empêchement de dépassement de capacité et en les ajoutant, obtenant ainsi une valeur de puissance (X² + Y²) ;
une étape de génération de valeur de prélèvement pour générer une valeur de prélèvement (K) comme ladite valeur du nombre inverse à obtenir ;
une étape de multiplication pour multiplier la valeur de prélèvement (K) par ladite étape de génération de valeur de prélèvement par un signal de sortie dans ladite étape d'opération arithmétique de puissance ;
une étape différentielle de soustraction d'un signal de multiplication obtenue dans ladite étape de multiplication à partir d'une référence prédéterminée (Ref), obtenant ainsi un signal d'erreur (ΔK) ;
une étape de mise à jour d'addition du signal d'erreur à la valeur de prélèvement (K) générée dans ladite étape de génération de valeur de prélèvement, mettant ainsi à jour le signal d'erreur (ΔK) qui est obtenu dans l'étape différentielle pour qu'il soit 0 ; et
une étape de traitement de boucle de répétition d'une boucle se composant de l'étape de multiplication, de l'étape différentielle, et de l'étape de mise à jour et pour générer la valeur de prélèvement (K) obtenue dans l'étape de génération de valeur de prélèvement comme ladite valeur d'un nombre inverse dans le cas où le signal d'erreur (ΔK) obtenu dans l'étape différentielle est égal ou inférieur à une valeur prédéterminée ;
caractérisé en ce que, dans ladite étape de multiplication, le signal de sortie dans ladite étape de calcul de puissance est multiplié deux fois par la valeur de prélèvement (K) à partir de ladite étape de génération de valeur de prélèvement.

2. Procédé selon la revendication 1, caractérisé en ce qu'il est compris en outre une étape d'ajustement de gain de boucle de multiplication du signal d'erreur (ΔK) déterminé dans ladite étape différentielle par la valeur de prélèvement (K) de ladite étape de génération de valeur de prélèvement et la fourniture du produit résultant à ladite étape de mise à jour pour obtenir un certain gain de boucle.

3. Procédé selon la revendication 1, caractérisé en ce qu'il comprend en outre une étape d'ajustage de gain de boucle de multiplication du signal d'erreur (ΔK) déterminé dans ladite étape différentielle par le carré (K²) de la valeur de prélèvement (K) de ladite étape de génération de valeur de prélèvement et la fourniture du produit résultant à ladite étape de mise à jour pour terminer un certain gain de boucle.

4. Procédé d'opération arithmétique de nombre inverse selon la revendication 1, caractérisé en ce que la valeur initiale de la valeur de prélèvement (K) générée dans ladite étape de génération de valeur de prélèvement est réglée à 0,7559.

5. Procédé d'opération arithmétique de nombre inverse selon 1, caractérisé en ce qu'une valeur de la constante (A) qui est multipliée dans ladite étape d'empêchement de capacité est réglée à 1/√2, et une valeur de la référence (Ref) qui est utilisée dans ladite étape différentielle est réglée à ½.

6. Circuit de calcul de nombre inverse pour calculer une valeur de nombre inverse d'une amplitude d'un signal vectoriel d'entrée comprenant :
un moyen d'empêchement de dépassement de capacité (10) pour multiplier un signal vectoriel d'entrée (X - jY) par une constante (A), pour réduire le niveau du signal vectoriel d'entrée comme nécessaire pour empêcher un dépassement de capacité du signal par une opération arithmétique ;
un moyen de calcul de puissance (12) pour calculer le carré d'une composante réelle et le carré d'une composante imaginaire du signal vectoriel d'entrée réduit en niveau fournis par ledit moyen d'empêchement de dépassement de capacité (10) et en les ajoutant, obtenant ainsi une valeur de puissance (X² + Y²) ;
un moyen de prélèvement (16) pour régler une valeur de prélèvement (K) comme une valeur du nombre inverse à obtenir ;
un moyen de multiplication (14) pour multiplier une valeur sur la base de la valeur de prélèvement (K) dudit moyen de prélèvement à un signal de sortie dudit moyen de calcul de puissance (12) ;
un moyen de calcul différentiel (18) pour soustraire un signal de sortie dudit moyen de multiplication (14) à partir d'une référence prédéterminée (Ref), obtenant ainsi un signal d'erreur (ΔK) ;
un moyen de mise a jour (22) pour additionner le signal d'erreur (ΔK) à la valeur de prélèvement (K) du moyen de prélèvement (16) et pour mettre à jour le signal d'erreur (ΔK) du moyen de calcul différentiel (18) pour qu'il soit 0 ; et
un moyen de traitement de boucle (50) pour répéter une boucle se composant du fonctionnement séquentiel du moyen de multiplication (14), du moyen de calcul différentiel (18), et du moyen de mise à jour (22), et pour fournir la valeur de prélèvement (K) obtenue dans le moyen de génération de valeur de prélèvement (16) comme une valeur de nombre inverse dans le cas où le signal d'erreur (ΔK) obtenu dans le moyen de calcul différentiel (18) est égal ou inférieur à une valeur prédéterminée ;
caractérisé en ce que le moyen de multiplication (14) multiplie deux fois un signal de sortie dudit moyen de calcul de puissance (12) par une valeur de prélèvement (K) dudit moyen de prélèvement.

7. Circuit selon la revendication 6, caractérisé en ce qu'il est fourni en outre un moyen d'ajustage de gain de boucle (20) pour multiplier le signal d'erreur (ΔK) dudit moyen différentiel (18) par la valeur de prélèvement (K) dudit moyen de prélèvement (16) et pour fournir le produit résultant audit moyen de mise à jour (22) pour obtenir un certain gain de boucle.

8. Circuit selon la revendication 6, caractérisé en ce qu'il comprend en outre un moyen d'ajustage de gain de boucle (20) pour multiplier le signal d'erreur (ΔK) dudit moyen de calcul différentiel (18) par le carré (K²) de la valeur de prélèvement (K) dudit moyen de prélèvement (16) et pour fournir le produit résultant audit moyen de mise à jour (22) pour réaliser un certain gain de boucle.

9. Circuit selon la revendication 6, caractérisé en ce qu'une valeur initiale de la valeur de prélèvement (K) qui est générée dans le moyen de prélèvement (16) est réglée à 0,7559.

10. Circuit selon la revendication 6, caractérisé en ce que la valeur de la constante (A) qui est multipliée par ledit moyen d'empêchement de dépassement de capacité (10) est réglée à 1/√2 et la valeur de la référence (Ref) dans ledit moyen de calcul différentiel (18) est réglé à ⅛.
